# EUROPÄISCHE PATENTANMELDUNG

(11) **EP 4 624 113 A1**
(43) Veröffentlichungstag der Anmeldung: **01.10.2025**
(21) Anmeldenummer: 25166981.8
(22) Anmeldetag: 28.03.2025
(51) Int. Cl.: B25J 11/00, B25J 15/00

(54) **GREIFERANORDNUNG MIT STÜTZFLÄCHE FÜR ZU TRANSPORTIERENDES PRODUKT**

(30) Priorität: 28.03.2024 DE 102024108902
(71) Anmelder: MULTIVAC Sepp Haggenmüller SE & Co. KG, 87787 Wolfertschwenden (DE)
(72) Erfinder: REMMELE, Thorsten, 87784 Westenheim (DE); NAPRAVNIK, Christian, 83026 Rosenheim (DE)
(74) Vertreter: Grünecker Patent- und Rechtsanwälte PartG mbB

(57) **Zusammenfassung**

Eine Greiferanordnung (1) umfasst einen Hauptkörper (5), einen Produktträger (9) und ein Stützelement (15). Der Produktträger (9) umfasst eine Transportfläche (11) zur Aufnahme eines zu transportierenden Produkts (3). Das Stützelement (15) ist an dem Hauptkörper (5) angebracht und umfasst eine Stützfläche (17). Der Produktträger (9) ist entlang einer relativ zu dem Hauptkörper (5) definierten Arbeitsrichtung (13) beweglich an dem Hauptkörper (5) angebracht. Der Produktträger (9) ist dazu konfiguriert, sich in einer Abgabebewegung zur Abgabe eines auf der Transportfläche (11) aufgenommenen Produkts (3) unter dem auf der Transportfläche (11) aufgenommenen Produkt (3) entlang der Arbeitsrichtung (13) wegzubewegen. Die Stützfläche (17) ist dazu konfiguriert, während der Abgabebewegung einen Teil (43) des Produkts (3), unter welchem sich der Produktträger (9) wegbewegt hat, zumindest zeitweise zu stützen.

## Beschreibung

Die Erfindung betrifft das Gebiet der Greiferanordnungen zum Transportieren von Produkten, insbesondere zum Transportieren von Lebensmittelprodukten. In einer Ausführungsform betrifft die Erfindung eine Verpackungsmaschine mit einer Greiferanordnung zum Transportieren von Produkten.

Die EP 4 059 672 A1 offenbart eine Greiferanordnung zur Anbringung an einer Robotereinrichtung. Die Greiferanordnung umfasst eine erste Backe und eine zweite Backe, die relativ zueinander von einer Greifposition in eine offene Position bewegbar sind. Zum Freigeben eines auf den Backen liegenden Nahrungsmittelprodukts ohne Drehung werden die erste Backe und die zweite Backe gleichzeitig voneinander weg in entgegengesetzte Richtungen bewegt, sodass das Nahrungsmittelprodukt zwischen den Backen durchfällt. Zum Freigeben eines Nahrungsmittelprodukts mit Drehung wird die erste Backe relativ zu der zweiten Backe von der Greifposition in die offene Position bewegt, sodass eine Seite des Nahrungsmittelprodukts nicht von der ersten Backe gestützt wird, während eine andere Seite des Nahrungsmittelprodukts zeitweise auf der zweiten Backe ruht, sodass sich ein Kippen des Nahrungsmittelprodukts um eine Längsachse des Nahrungsmittelprodukts ergibt, wenn das Nahrungsmittelprodukt zwischen den beiden Backen abgeworfen wird.

Es ist eine Aufgabe der Erfindung, einen Weg zum Transportieren oder Positionieren von Produkten anzugeben, insbesondere zum Positionieren von Produkten in einer gewünschten Position und/oder Orientierung. Vorzugsweise sollen die Produkte reproduzierbar und in einem stabilen Prozess transportiert oder positioniert werden.

Gemäß einem ersten Aspekt der Erfindung wird eine Greiferanordnung bereitgestellt. Die Greiferanordnung umfasst einen Hauptkörper, einen Produktträger und ein Stützelement. Der Produktträger umfasst eine Transportfläche zur Aufnahme eines zu transportierenden Produkts. Der Produktträger ist entlang einer relativ zu dem Hauptkörper definierten Arbeitsrichtung beweglich an dem Hauptkörper angebracht. Der Produktträger ist dazu konfiguriert, sich in einer Abgabebewegung zur Abgabe eines auf der Transportfläche aufgenommenen Produkts unter dem auf der Transportfläche aufgenommenen Produkt entlang der Arbeitsrichtung wegzubewegen. Das Stützelement ist an dem Hauptkörper angebracht. Das Stützelement umfasst eine Stützfläche. Die Stützfläche ist dazu konfiguriert, während der Abgabebewegung des Produktträgers einen Teil des Produkts, unter welchem sich der Produktträger wegbewegt hat, zumindest zeitweise zu stützen.

Die Abgabebewegung des Produktträgers kann ein Abwerfen oder Ablegen des auf der Transportfläche aufgenommenen Produkts bewirken.

Die Stützfläche kann einen Teil des Produkts, unter welchem sich der Produktträger wegbewegt hat, zumindest zeitweise auf einer Höhe der Stützfläche halten. Die Stützfläche kann dazu konfiguriert sein, einem Nach-Unten-Fallen oder Nach-Unten-Biegen eines Teils des Produkts, unter welchem sich der Produktträger wegbewegt hat, zumindest zeitweise entgegenzuwirken. Die Stützfläche kann dem entgegenwirken, dass während der Abgabebewegung ein Teil des Produkts, unter welchem sich der Produktträger wegbewegt hat, gegenüber einem noch auf dem Produktträger aufgenommenen Teil des Produkts nach unten hängt oder nach unten klappt. Die Stützfläche kann während der Abgabebewegung einer Verformung des Produkts entgegenwirken oder eine Verformung des Produkts reduzieren. Die Stützfläche kann dem entgegenwirken, dass das Produkt während der Abgabebewegung eine Tendenz zu einer Drehung um eine eigene Achse des Produkts entwickelt. Die Stützfläche kann begünstigen, dass das Produkt während der Abgabebewegung in einer Form und/oder in einer Orientierung verbleibt, in welcher das Produkt vor Beginn der Abgabebewegung auf der Transportfläche des Produktträgers vorgelegen hat. Die Stützfläche kann begünstigen, dass das Produkt am Ende der Abgabebewegung, wenn sich der Produktträger vollständig unter dem Produkt wegbewegt hat, in zumindest im Wesentlichen der Orientierung und/oder Form nach unten freigegeben wird oder nach unten fällt, in welcher das Produkt vor Beginn der Abgabebewegung auf der Transportfläche des Produktträgers vorgelegen hat.

Die Stützfläche kann zumindest während der Abgabebewegung parallel zu der Transportfläche des Produktträgers liegen. Die Transportfläche kann zumindest während der Abgabebewegung nach oben gerichtet sein. Die Stützfläche kann zumindest während der Abgabebewegung nach oben gerichtet sein.

Die Stützfläche kann während der Abgabebewegung auf demselben Höhenniveau liegen wie die Transportfläche. Wenn die Stützfläche während der Abgabebewegung auf demselben Höhenniveau wie die Transportfläche liegt, kann einem Absacken eines Teils des Produkts, unter welchem sich der Produktträger wegbewegt hat, besonders gut entgegengewirkt werden. Wenn die Stützfläche während der Abgabebewegung auf demselben Höhenniveau wie die Transportfläche liegt, kann Formveränderungen des Produkts während der Abgabebewegung besonders wirksam entgegengewirkt werden.

Die Stützfläche kann während der Abgabebewegung tiefer als die Transportfläche liegen. Eine tiefer als die Transportfläche liegende Stützfläche kann eine Übergabe des Produkts von der Transportfläche auf die Stützfläche vereinfachen. Vorzugsweise liegt die Stützfläche während der Abgabebewegung um maximal 10 cm, oder um maximal 7 cm, oder um maximal 5 cm, oder um maximal 3 cm, oder um maximal 2 cm, oder um maximal 1 cm tiefer als die Transportfläche. Die Stützfläche kann während der Abgabebewegung zumindest um 5 mm, oder zumindest um 1 cm, oder zumindest um 3 cm, oder zumindest um 5 cm tiefer liegen als die Transportfläche.

Die Transportfläche kann dazu konfiguriert sein, zu Beginn der Abgabebewegung bezüglich einer vertikalen Projektionsrichtung oder bezüglich einer zu der Transportfläche senkrechten Projektionsrichtung mit der Stützfläche zu überlappen. Zumindest ein Teil der Stützfläche kann zu Beginn der Abgabebewegung direkt unterhalb der Transportfläche vorliegen. Ein Überlapp zwischen der Transportfläche und der Stützfläche kann eine Übergabe eines Teils des Produkts, unter welchem sich der Produktträger wegbewegt hat, von der Transportfläche des Produktträgers auf die Stützfläche begünstigen.

Der von der Stützfläche während der Abgabebewegung zumindest zeitweise gestützte Teil des Produkts kann einen Teil des Produkts umfassen, unter welchem sich der Produktträger bei der Abgabebewegung als erstes wegbewegt hat. Die Stützfläche kann dem entgegenwirken, dass ein Teil des Produkts, unter welchem sich der Produktträger während der Abgabebewegung zuerst wegbewegt hat, gegenüber einem noch auf dem Produktträger liegenden Teil des Produkts nach unten sackt.

Die Bewegung des Produktträgers bei der Abgabebewegung entlang der Arbeitsrichtung kann von dem Stützelement weg gerichtet sein. Ein Teil des Produkts, unter welchem sich der Produktträger während der Abgabebewegung als erstes wegbewegt, kann der Teil des Produkts sein, welcher am nächsten an dem Stützelement liegt, oder auf das Stützelement zu gerichtet ist.

Das Stützelement kann dazu konfiguriert sein, dem Produktträger zumindest während eines ersten Teils der Abgabebewegung entlang der Arbeitsrichtung zu folgen. Das Stützelement kann dazu konfiguriert sein, entlang der Arbeitsrichtung hinter dem Produktträger herzufahren und einen Teil des Produkts aufzunehmen, unter welchem sich der Produktträger wegbewegt hat. Wenn das Stützelement dem Produktträger entlang der Arbeitsrichtung folgt, kann eine Übergabe eines Teils des Produkts, unter welchem sich der Produktträger wegbewegt hat, auf die Stützfläche begünstigt werden.

Während des ersten Teils der Abgabebewegung kann ein Abstand entlang der Arbeitsrichtung zwischen der Stützfläche und der Transportfläche konstant bleiben. Im weiteren Verlauf der Abgabebewegung kann sich der Abstand zwischen der Stützfläche und der Transportfläche entlang der Arbeitsrichtung vergrößern.

Das Stützelement kann dazu konfiguriert sein, während eines dem ersten Teil der Abgabebewegung nachfolgenden zweiten Teils der Abgabebewegung seine Position entlang der Arbeitsrichtung beizubehalten.

Das Stützelement kann dazu konfiguriert sein, zumindest während der Abgabebewegung bezüglich des Hauptkörpers ortsfest zu sein. Das Stützelement kann dazu konfiguriert sein, zumindest während der gesamten Abgabebewegung bezüglich des Hauptkörpers ortsfest zu sein.

Die Greiferanordnung kann dazu konfiguriert sein, in einem ersten Betriebsmodus betrieben zu werden. In dem ersten Betriebsmodus kann die Stützfläche dazu konfiguriert sein, während der Abgabebewegung einen Teil des Produkts zumindest zeitweise zu stützen, unter welchem sich der Produktträger wegbewegt hat. Der erste Betriebsmodus kann einen Abwurf oder ein Absetzen des Produkts in derjenigen Orientierung begünstigen, in welcher das Produkt auf dem Produktträger, insbesondere auf der Transportfläche des Produktträgers, vorgelegen hat.

Die Greiferanordnung kann dazu konfiguriert sein, in einem zweiten Betriebsmodus betrieben zu werden. In dem zweiten Betriebsmodus kann die Stützfläche dazu konfiguriert sein, während der Abgabebewegung nicht mit dem Produkt in Kontakt zu kommen. Der zweite Betriebsmodus kann ein Drehen des Produkts bei einer Abgabe oder einem Abwurf des Produkts begünstigen.

Die Greiferanordnung kann sowohl in dem ersten Betriebsmodus als auch in dem zweiten Betriebsmodus betreibbar sein. Die Greiferanordnung kann dazu konfiguriert sein, abhängig von Betriebsvorgaben wahlweise in dem ersten Betriebsmodus oder in dem zweiten Betriebsmodus betrieben zu werden. Die Greiferanordnung kann dazu konfiguriert sein, in Reaktion auf eine erste Betriebsvorgabe in dem ersten Betriebsmodus betrieben zu werden und in Reaktion auf eine zweite Betriebsvorgabe in dem zweiten Betriebsmodus betrieben zu werden. Die erste Betriebsvorgabe kann eine Vorgabe sein, dass das Produkt ohne Drehung abgegeben oder abgeworfen werden soll. Die zweite Vorgabe kann eine Vorgabe sein, dass das Produkt mit Drehung abgegeben werden soll.

Die Greiferanordnung kann einen Anschlag umfassen. Der Produktträger kann dazu konfiguriert sein, entlang der Arbeitsrichtung auf den Anschlag zuzufahren, um ein zwischen dem Anschlag und dem Produktträger liegendes Produkt auf der Transportfläche aufzunehmen. Der Anschlag kann dazu konfiguriert sein, hierbei einem Wegschieben des Produkts durch den Produktträger entgegenzuwirken. Der Anschlag kann eine Anschlagsfläche zum Eingriff mit dem Produkt aufweisen. Die Anschlagsfläche kann zumindest im Wesentlichen senkrecht zu der Transportfläche stehen.

Der Anschlag kann an dem Hauptkörper angebracht sein. Der Anschlag kann höhenverstellbar an dem Hauptkörper angebracht sein. Der Anschlag kann zwischen einer Einsatzposition und einer Verstauposition verstellbar, insbesondere höhenverstellbar, an dem Hauptkörper angebracht sein. In der Einsatzposition kann der Anschlag dazu konfiguriert sein, zur Aufnahme eines Produkts mit dem Produktträger zusammenzuwirken. In der Verstauposition kann der Anschlag aus einem Raum zwischen dem Produktträger und dem Stützelement entfernt vorliegen, um eine Übergabe eines Teils des Produkts von der Transportfläche des Produktträgers auf die Stützfläche des Stützelements nicht zu behindern.

Der Produktträger kann ein Strukturelement umfassen. Das Strukturelement kann entlang der Arbeitsrichtung beweglich an dem Hauptkörper angebracht sein. Das Strukturelement kann eine erste Kante und eine zweite Kante definieren. Die erste Kante und die zweite Kante können entlang der Arbeitsrichtung beabstandet sein. Die erste Kante und die zweite Kante können sich jeweils senkrecht zu der Arbeitsrichtung erstrecken. Die erste Kante und die zweite Kante können parallel zueinander sein. Der Produktträger kann ein Trägerband umfassen. Das Trägerband kann sich um die erste Kante und die zweite Kante herum erstrecken und so ein Obertrum bilden, welches die Transportfläche bereitstellt. Das Trägerband kann vollständig oder teilweise um das Strukturelement umlaufen.

Die Greiferanordnung kann eine Halteeinrichtung umfassen. Die Halteeinrichtung kann an dem Hauptkörper angebracht sein, insbesondere starr angebracht sein. Die Halteeinrichtung kann bezüglich des Hauptkörpers ortsfest sein. Die Halteeinrichtung kann dazu konfiguriert sein, einen Haltebereich des Trägerbands festzuhalten, sodass eine Bewegung des Strukturelements entlang der Arbeitsrichtung zu einem Umlaufen des Trägerbands um die erste Kante und die zweite Kante führt. Die Halteeinrichtung kann dazu konfiguriert sein, den Haltebereich des Trägerbands derart festzuhalten, dass bei einer Bewegung des Strukturelements entlang der Arbeitsrichtung ein das Obertrum bildender Bereich des Trägerbands keine Bewegung entlang der Arbeitsrichtung ausführt. Durch das Festhalten des Haltebereichs des Trägerbands durch die Halteeinrichtung kann bei einer Bewegung des Strukturelements entlang der Arbeitsrichtung ein Umlaufen des Trägerbands um die erste Kante und die zweite Kante erreicht werden, ohne dass ein separater Antrieb für das Trägerband erforderlich ist. Durch eine Bewegung des Strukturelements entlang der Arbeitsrichtung kann eine Position des Obertrums entlang der Arbeitsrichtung verschoben werden. Dies kann erfolgen, ohne dass ein das Obertrum bildender Bereich des Trägerbands eine Bewegung entlang der Arbeitsrichtung ausführt.

Durch eine Bewegung des Strukturelements entlang der Arbeitsrichtung kann die Transportfläche unter einem auf der Transportfläche liegenden Produkt entlang der Arbeitsrichtung verschoben werden, ohne dass sich eine Absolutposition des Produkts im Raum ändert. Durch eine Bewegung des Strukturelements entlang der Arbeitsrichtung kann die Transportfläche unter das Produkt geschoben werden, ohne dass das Produkt auf der Transportfläche eine Gleitbewegung entlang der Arbeitsrichtung ausführt. Das Produkt kann reibungsreduziert auf der Transportfläche aufgenommen werden. Durch eine Bewegung des Strukturelements entlang der Arbeitsrichtung kann die Transportfläche unter dem Produkt weggezogen werden, ohne dass das Produkt auf der Transportfläche eine Gleitbewegung ausführt. Hierdurch kann das Produkt reibungsreduziert und schonend abgegeben werden.

Die Greiferanordnung kann eine Verfahreinrichtung umfassen. Der Hauptkörper kann an der Verfahreinrichtung angebracht sein. Die Verfahreinrichtung kann dazu konfiguriert sein, den Hauptkörper von einem Aufnahmeort, an dem ein Produkt auf der Transportfläche aufgenommen wurde, an einen Abgabeort zu bewegen, an dem das Produkt von der Transportfläche abgegeben werden soll. Der Hauptkörper kann eine Anbringungsstelle umfassen. Der Hauptkörper kann über die Anbringungsstelle an der Verfahreinrichtung angebracht sein, insbesondere lösbar angebracht sein. Die Verfahreinrichtung kann beispielsweise als Roboterarm ausgebildet sein oder einen Roboterarm umfassen.

Gemäß einem zweiten Aspekt der Erfindung wird eine Verpackungsmaschine oder eine Verpackungslinie bereitgestellt. Die Verpackungsmaschine oder die Verpackungslinie umfasst die beschriebene Greiferanordnung. Die Verpackungsmaschine oder die Verpackungslinie umfasst eine Produktbereitstellungseinrichtung, welche einen Aufnahmeort zur Aufnahme des Produkts auf der Transportfläche bereitstellen kann. Die Verpackungsmaschine oder die Verpackungslinie umfasst eine Verpackungsbereitstellungseinrichtung, welche einen Abgabeort zum Abgeben des Produkts von der Transportfläche bereitstellen kann. Die Greiferanordnung kann dazu konfiguriert sein, ein von oder auf der Produktbereitstellungseinrichtung bereitgestelltes Produkt aufzunehmen, insbesondere auf der Transportfläche des Produktträgers aufzunehmen. Die Greiferanordnung kann dazu konfiguriert sein, die Transportfläche mit dem darauf aufgenommenen Produkt über eine von oder auf der Verpackungsbereitstellungseinrichtung bereitgestellte Verpackungsschale zu bewegen. Die Greifereinrichtung kann dazu konfiguriert sein, das Produkt in die Verpackungsschale abzugeben oder abzuwerfen.

Die Greiferanordnung oder die Verpackungsmaschine oder die Verpackungslinie kann eine Steuereinrichtung umfassen. Die Steuereinrichtung kann dazu konfiguriert sein, in Reaktion auf eine Vorgabe, dass das Produkt ohne Drehung abgegeben oder abgeworfen werden soll, die Greiferanordnung in dem ersten Betriebsmodus zu betreiben. Die Steuereinrichtung kann dazu konfiguriert sein, in Reaktion auf eine Vorgabe, dass das Produkt mit Drehung abgegeben werden soll, die Greiferanordnung in dem zweiten Betriebsmodus zu betreiben.

Gemäß einem dritten Aspekt der Erfindung wird ein Verfahren zum Transportieren von Produkten mit einer Greiferanordnung bereitgestellt. Die Greiferanordnung umfasst einen Hauptkörper, einen an dem Hauptkörper angebrachten Produktträger und ein an dem Hauptkörper angebrachtes Stützelement. Die Greiferanordnung wird an einen Aufnahmeort verbracht. An dem Aufnahmeort wird der Produktträger entlang einer relativ zu dem Hauptkörper definierten Arbeitsrichtung bewegt, sodass der Produktträger unter ein Produkt geschoben wird und das Produkt so auf einer Transportfläche des Produktträgers aufgenommen wird. Die Greiferanordnung mit dem aufgenommenen Produkt wird an einen Abgabeort verbracht. An dem Abgabeort wird der Produktträger entlang der Arbeitsrichtung bewegt, sodass sich der Produktträger in einer Abgabebewegung unter dem auf der Transportfläche aufgenommenen Produkt wegbewegt. Ein Teil des Produkts, unter welchem sich der Produktträger wegbewegt hat, wird durch eine Stützfläche des Stützelements während zumindest eines Teils der Abgabebewegung gestützt.

Der Produktträger und das Stützelement können sich während des weiteren Verlaufs der Abgabebewegung auseinander bewegen, zumindest bis das Produkt zwischen dem Produktträger und dem Stützelement nach unten durchfällt.

Das Stützelement kann zumindest während eines ersten Teils der Abgabebewegung dem Produktträger entlang der Arbeitsrichtung nachgeführt werden und dabei zumindest teilweise unter das Produkt gelangen.

Das Produkt kann ein Lebensmittelprodukt sein. Das Produkt kann zumindest zwei unterschiedlich ausgebildete Produktseiten aufweisen. Beispielsweise kann das Produkt ein Fischfilet mit einer Fleischseite und einer Hautseite sein. Wenn steuerbar ist, ob das Produkt mit oder ohne Drehung abgelegt oder abgeworfen werden soll, kann gesteuert werden, mit welcher Seite nach unten das Produkt zu liegen kommt.

Merkmale, Erläuterungen und Ausführungen, welche in Bezug auf einen der Aspekte der Erfindung beschrieben werden, können auf jeden anderen der Aspekte der Erfindung übertragen werden oder mit jedem anderen der Aspekte kombiniert werden. Die Greiferanordnung oder die Verpackungsmaschine oder die Verpackungslinie kann zum Durchführen des Verfahrens geeignet, ausgelegt und/oder konfiguriert sein. Das Verfahren kann anhand der Greiferanordnung oder anhand der Verpackungsmaschine oder anhand der Verpackungslinie durchgeführt werden oder durchführbar sein.

Im Folgenden wird die Erfindung anhand von Ausführungsformen unter Bezugnahme auf die Figuren weiter erläutert.

Figur 1 zeigt eine schematische Perspektivansicht einer Greiferanordnung gemäß einer Ausführungsform.

Die Figuren 2 bis 4 zeigen eine Abfolge eines Produktaufnahmevorgangs durch die Greiferanordnung in schematischer Seitenansicht.

Die Figuren 5 und 6 zeigen eine Detailansicht des Produktträgers der Greiferanordnung in unterschiedlichen Stellungen in schematischer Seitenansicht.

Die Figuren 7 und 8 zeigen eine Abfolge zum Ablegen oder Abwerfen eines Produkts mit Drehung in schematischer Seitenansicht der Greiferanordnung.

Die Figuren 9 und 10 zeigen eine Abfolge zum Ablegen oder Abwerfen des Produkts ohne Drehung in schematischer Seitenansicht der Greiferanordnung.

Figur 11 zeigt eine schematische Seitenansicht einer Greiferanordnung in einer alternativen Ausführungsform.

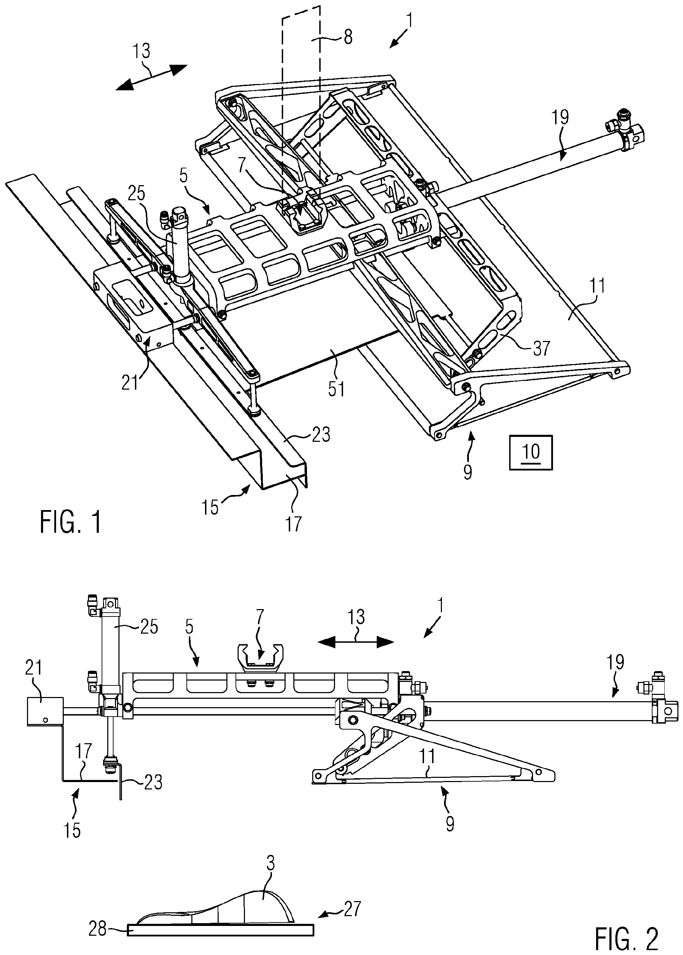

Figur 1 zeigt eine schematische Perspektivansicht einer Greiferanordnung 1 gemäß einer Ausführungsform. Die Greiferanordnung 1 ist zum Handhaben und Transportieren von Produkten 3 (siehe Figuren 2 bis 10) konfiguriert. Insbesondere ist die Greiferanordnung 1 dazu konfiguriert, Produkte 3 an einem Aufnahmeort 27 aufzunehmen und an einem Abgabeort 41 abzusetzen. Die Greiferanordnung 1 umfasst einen Hauptkörper 5 mit einer Anbringungsstelle 7. Der Hauptkörper 5 kann über die Anbringungsstelle 7 mit einer Verfahreinrichtung 8, insbesondere mit einem Roboterarm, zum Bewegen der Greiferanordnung zwischen dem Aufnahmeort 27 und dem Abgabeort 41, angebracht werden. Die Greiferanordnung 1 kann durch eine Steuerung 10 gesteuert werden. Die Greiferanordnung 1 kann Teil einer Verpackungsmaschine oder einer Verpackungslinie sein.

An dem Hauptkörper 5 ist ein Produktträger 9 angebracht. Der Produktträger 9 umfasst eine Transportfläche 11 zur Aufnahme eines zu transportierenden Produkts 3. Der Produktträger 9 ist entlang einer relativ zu dem Hauptkörper 5 definierten Arbeitsrichtung 13 beweglich an dem Hauptkörper 5 angebracht. Bezüglich der Arbeitsrichtung 13 dem Produktträger 9 gegenüberliegend ist ein Stützelement 15 an dem Hauptkörper 5 angebracht. Das Stützelement 15 umfasst eine Stützfläche 17 zum Stützen des Produkts 3. In der dargestellten Ausführungsform ist das Stützelement 15 ebenfalls entlang der Arbeitsrichtung 13 beweglich an dem Hauptkörper 5 angebracht. Alternativ könnte das Stützelement 15 unbeweglich an dem Hauptkörper 5 angebracht sein.

Die Greiferanordnung 1 umfasst eine erste Antriebseinrichtung 19 zum Verschieben des Produktträgers 9 entlang der Arbeitsrichtung 13. Die Greiferanordnung 1 umfasst eine zweite Antriebseinrichtung 21 zum Verschieben des Stützelements 15 entlang der Arbeitsrichtung 13.

Die Greiferanordnung 1 umfasst einen Anschlag 23, welcher mittels einer dritten Antriebseinrichtung 25 höhenverstellbar an dem Hauptkörper 5 angebracht ist.

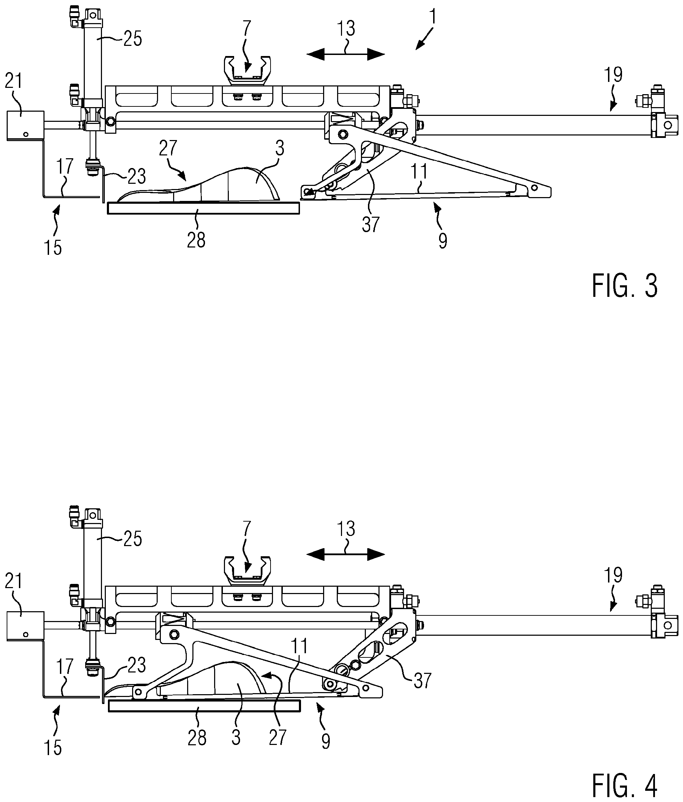

Die Abfolge der Figuren 2 bis 4 zeigt einen Vorgang zum Aufnehmen eines Produkts 3 an dem Aufnahmeort 27. Der Aufnahmeort 27 kann durch eine Produktbereitstellungseinrichtung 28 definiert werden, auf welcher das Produkt 3 bereitgestellt wird. In der Abfolge der Figuren 2 und 3 wird der Hauptkörper 5 mit den daran angebrachten Komponenten durch die Verfahreinrichtung 8 insgesamt derart bewegt, dass der Produktträger 9 einerseits und das Stützelement 15 sowie der Anschlag 23 andererseits auf gegenüberliegenden Seiten des Produkts 3 liegen. Beim Aufnehmen des Produkts 3 befindet sich der Anschlag 23 in einer abgesenkten Position. In der Abfolge der Figuren 3 und 4 wird der Produktträger 9 durch die erste Antriebseinrichtung 19 entlang der Arbeitsrichtung 13 auf den Anschlag 23 zubewegt. Hierbei schiebt sich die Transportfläche 11 unter das Produkt 3, sodass das Produkt 3 auf der Transportfläche 11 aufgenommen wird. Der Anschlag 23 unterbindet hierbei ein Wegschieben des Produkts 3 durch den Produktträger 9 entlang der Arbeitsrichtung 13. Aus der in Figur 4 dargestellten Situation heraus kann der Produktträger 9 noch weiter auf den Anschlag 23 zubewegt werden, um das Produkt 3 vollständig auf der Transportfläche 11 aufzunehmen.

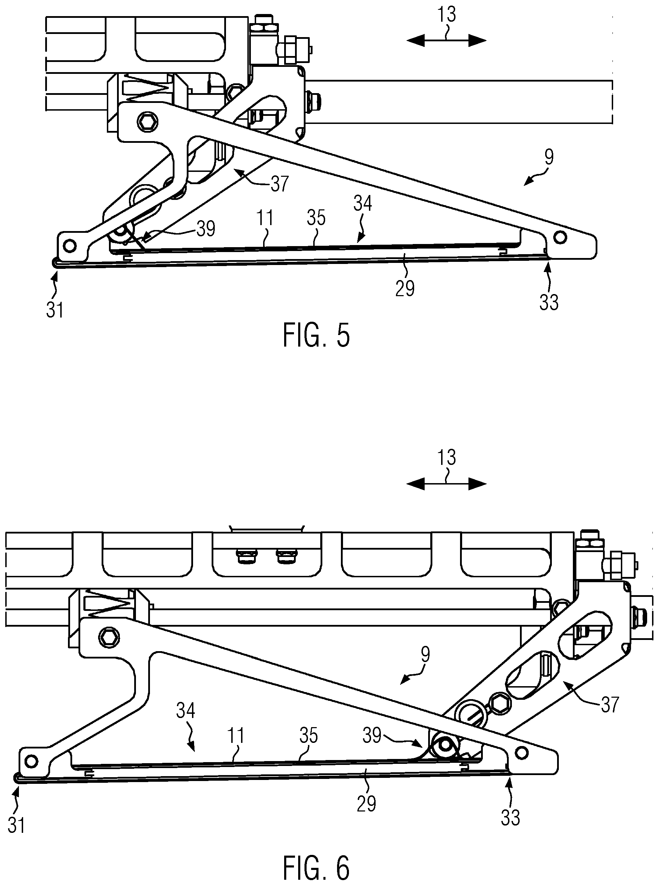

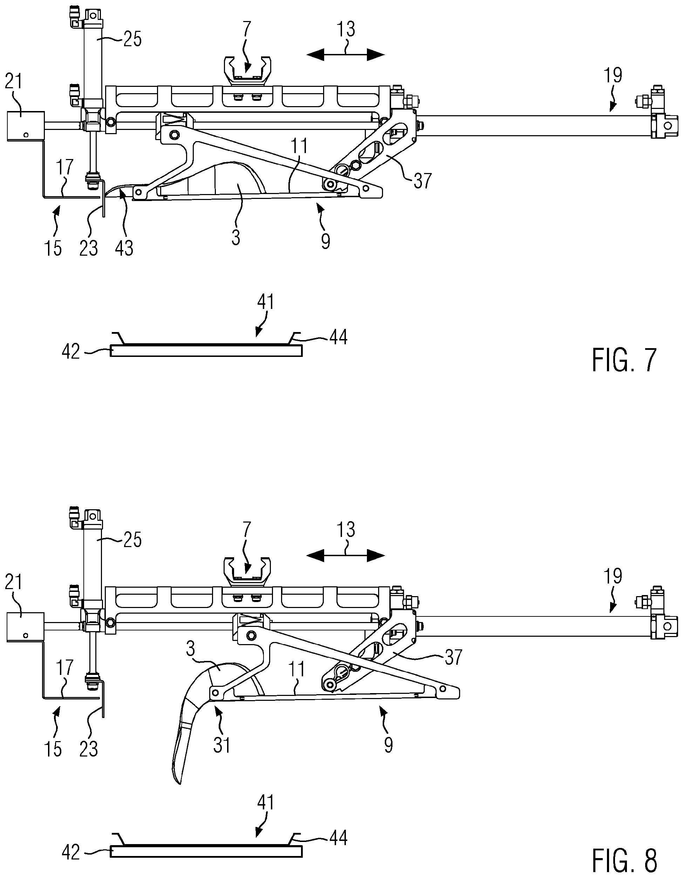

Die Figuren 5 und 6 zeigen eine schematische Detailansicht des Produktträgers 9 in unterschiedlichen Vorschubpositionen des Produktträgers 9 entlang der Arbeitsrichtung 13. Der Produktträger 9 umfasst ein Strukturelement 29 mit einer ersten Kante 31 und einer zweiten Kante 33, welche entlang der Arbeitsrichtung 13 voneinander beabstandet sind und quer zu der Arbeitsrichtung 13 verlaufen. Der Produktträger 9 umfasst zudem ein Trägerband 35, welches um die erste Kante 31 und die zweite Kante 33 des Strukturelements 29 umläuft. Ein Obertrum 34 des umlaufenden Trägerbands 35 bildet die Transportfläche 11 zur Aufnahme des Produkts 3. Die Greiferanordnung 1 umfasst eine Halteeinrichtung 37. Die Halteeinrichtung 37 ist starr an dem Hauptkörper 5 angebracht oder Teil des Hauptkörpers 5. Ein Haltebereich 39 des Trägerbands 35 ist an der Halteeinrichtung 37 angebracht und wird so bezüglich der Arbeitsrichtung 13 an einer festen Position gehalten. Dies hat zur Folge, dass das Trägerband 35 um die erste Kante 31 und die zweite Kante 33 entlang der Arbeitsrichtung 13 umläuft, wenn der Produktträger 9 relativ zu dem Hauptkörper 5 entlang der Arbeitsrichtung 13 bewegt wird. Ein das Obertrum 34 des Trägerbands 35 bildender Teil des Trägerbands 35 führt bei einer Bewegung des Produktträgers 9 aber keine Relativbewegung gegenüber dem Hauptkörper 5 aus, wenn der Produktträger 9 entlang der Arbeitsrichtung 13 bewegt wird. Durch die spezielle Ausgestaltung des Produktträgers 9 mit dem Strukturelement 29 und dem Trägerband 35 kann die Transportfläche 11 vergleichsweise reibungsarm unter das Produkt 3 geschoben werden, um das Produkt 3 aufzunehmen. Wenn das Produkt 3, wie nachfolgend unter Bezugnahme auf die Figuren 7 bis 10 beschrieben, von der Greiferanordnung 1 wieder abgegeben wird, kann der Produktträger 9 unter dem Produkt 3 wegbewegt werden, ohne dass eine Gleitbewegung des Produkts 3 relativ zu der Transportfläche 11 erfolgt.

Nach Aufnahme des Produkts 3 wird der Hauptkörper 5 mit den daran angebrachten Komponenten durch die Verfahreinrichtung 8 an einen Abgabeort 41 verfahren, wo das Produkt 3 von der Greiferanordnung 1 wieder abgegeben wird. Der Abgabeort 41 kann durch eine Verpackungsbereitstellungseinrichtung 42 definiert werden, welche eine Verpackungsschale 44 zur Aufnahme des Produkts 3 bereitstellt.

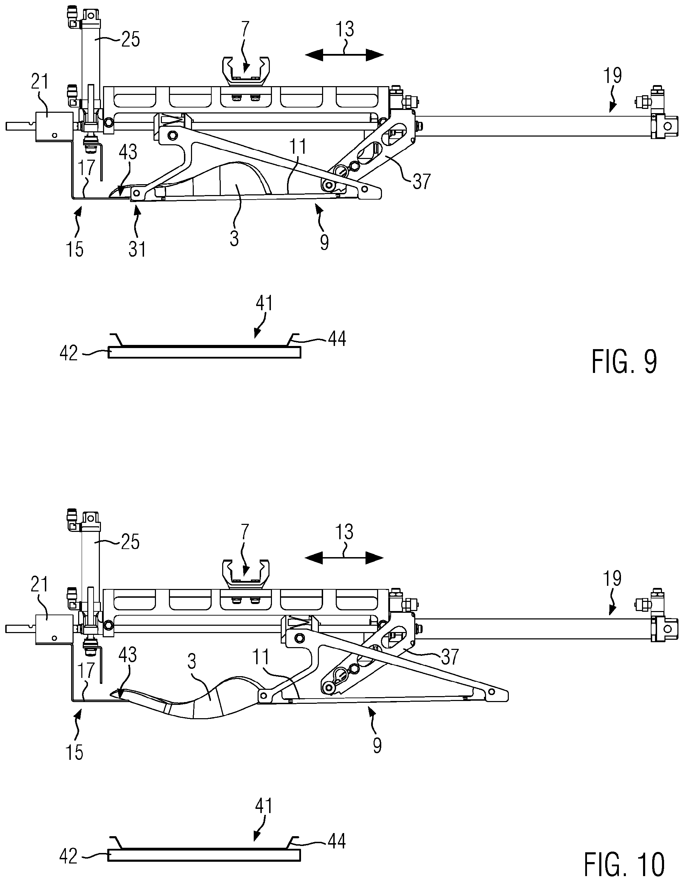

Die Produktabgabe kann mittels der Greiferanordnung 1 auf zwei verschiedene Arten erfolgen, nämlich eine Produktabgabe mit Drehung oder eine Produktabgabe ohne Drehung. Eine Produktabgabe mit Drehung ist in den Figuren 7 und 8 gezeigt. Eine Produktabgabe ohne Drehung ist in den Figuren 9 und 10 gezeigt.

Bei beiden Varianten der Produktabgabe wird der Produktträger 9 entlang der Arbeitsrichtung 13 von dem Stützelement 15 weggefahren, um den Produktträger 9 unter dem auf der Transportfläche 11 aufgenommenen Produkt 3 wegzubewegen.

In Figur 7 hat die Abgabebewegung des Produktträgers 9 bereits begonnen und der Produktträger 9 hat sich bereits unter einem Teil 43 des Produkts 3 wegbewegt. In Figur 8 hat sich der Produktträger 9 weiter unter dem Produkt 3 wegbewegt. Ein nicht mehr von dem Produktträger 9 gestützter Bereich des Produkts 3 hängt bereits über die erste Kante 31 nach unten. Bei weiterer Bewegung des Produktträgers 9 unter dem Produkt 3 weg fällt das Produkt 3 nach unten in die Verpackungsschale 44. Durch die Dynamik, die sich aufgrund des Nach-Unten-Klappens des Produkts 3 um die erste Kante 31 ergibt, führt das Produkt 3 eine Drehung um eine eigene Achse des Produkts 3 durch, wenn das Produkt 3 endgültig von dem Produktträger 9 nach unten fällt. Hierdurch ergibt sich die Situation, dass das Produkt 3 in einer Orientierung zu liegen kommt, in welcher Produktoberseite und Produktunterseite verglichen mit der Orientierung vertauscht sind, in der das Produkt 3 auf der Transportfläche 11 des Produktträgers 9 vorlag. Das Stützelement 15 kommt bei der Produktabgabe mit Drehung nicht zum Einsatz.

Wie erwähnt, zeigen die Figuren 9 und 10 die alternative Variante der Produktabgabe, die Produktabgabe ohne Drehung. Wie in Figur 7 hat auch in Figur 9 bereits die Abgabebewegung des Produktträgers 9 begonnen und der Produktträger 9 hat sich bereits unter einem Teil 43 des Produkts 3 wegbewegt. Der Teil 43 des Produkts 3 wird somit nicht mehr von dem Produktträger 9 gestützt. Im Gegensatz zu der Situation beim Abwerfen mit Drehung kommt beim Abwerfen ohne Drehung das Stützelement 15 zum Einsatz. Das Stützelement 15 wird durch die zweite Antriebseinrichtung 21 angetrieben, um dem Produktträger 9 während eines ersten Teils der Abgabebewegung entlang der Arbeitsrichtung 13 zu folgen. In der in Figur 9 dargestellten Situation hat sich das Stützelement 15 durch diese Bewegung schon unter den nicht mehr auf dem Produktträger 9 liegenden Teil 43 des Produkts 3 geschoben und stützt diesen somit. Das Herunterklappen des Produkts 3 um die erste Kante 31 wird beim Abwerfen ohne Drehen durch das Stützelement 15 verhindert. In einem zweiten Teil der Abgabebewegung wird der Produktträger 9 weiter entlang der Arbeitsrichtung 13 unter dem Produkt 3 wegbewegt, das Stützelement 15 aber nicht nachgeführt. Der Teil 43 bleibt weiter auf der Stützfläche 17 des Stützelements 15 abgestützt. Wie in Figur 10 dargestellt, fällt das Produkt 3 schließlich zwischen dem Stützelement 15 und dem Produktträger 9 nach unten. Hierbei behält das Produkt 3 die Orientierung, in welcher es auf der Transportfläche 11 der Produktträgers 9 gelegen hat und kommt in dieser Orientierung in der Verpackungsschale 44 zu liegen.

In Figur 1 ist ein optional vorgesehener Niederhalter 51 vorgesehen, welcher eine Position des Produkts 3 bei der Bewegung der Greiferanordnung 1 im Raum stabilisieren kann. Der Übersichtlichkeit halber ist der Niederhalter 51 in den Figuren 2 bis 10 nicht dargestellt.

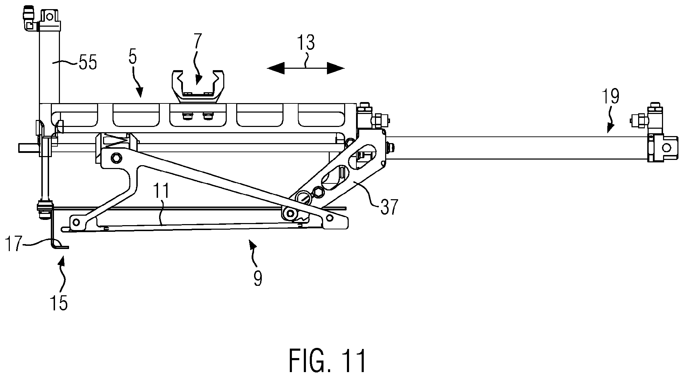

Figur 11 zeigt eine Greiferanordnung 1 einer alternativen Ausführungsform. Die grundlegende Funktionsweise entspricht der der Greiferanordnung 1 der in den Figuren 1 bis 10 dargestellten Ausführungsform und wird daher nicht noch einmal beschrieben. Es wird lediglich auf Unterschiede zu der in den Figuren 1 bis 10 dargestellten Ausführungsform eingegangen.

In der Ausführungsform von Figur 11 ist das Stützelement 15 nicht entlang der Arbeitsrichtung 13 beweglich und wird dem Produktträger 9 bei der Abgabebewegung ohne Drehung nicht nachgeführt. Die Stützfläche 17 zumindest zu Beginn der Abgabebewegung so unterhalb des Produktträgers 9 vorgesehen, dass ein Überlapp zwischen der Stützfläche 17 und dem Produktträger 9 bezüglich einer vertikalen Richtung besteht. Wenn der Produktträger 9 zu Beginn der Abgabebewegung entlang der Arbeitsrichtung 13 unter dem Produkt 3 wegbewegt wird, kommt ein Teil 43 des Produkts 3, unter welchem sich der Produktträger 9 wegbewegt hat, auf der Stützfläche 17 zu liegen, so dass das Produkt 3 schließlich ähnlich wie in Figur 10 dargestellt abgegeben wird.

Das Stützelement 15 kann in der in Figur 11 dargestellten Ausführungsform unbeweglich an dem Hauptkörper 5 angebracht sein. Alternativ kann das Stützelement 15 aus der in Figur 11 dargestellten Einsatzposition in eine Lagerposition verbringbar sein, um ein Umschalten zwischen einer Produktabgabe mit Drehung ohne Mitwirken des Stützelements 15 in der Lagerposition und einer Produktabgabe ohne Drehung mit Mitwirken des Stützelements 15 in der Einsatzposition zu vereinfachen. Beispielsweise kann das Stützelement 15 durch einen Antrieb 55 von der Einsatzposition in eine gegenüber der Einsatzposition relativ zu dem Hauptkörper 5 angehobene Lagerposition verbracht werden. Alternativ kann das Stützelement um eine Schwenkachse zwischen der Einsatzposition und der Lagerposition verbringbar sein.

## Patentansprüche

1. Greiferanordnung (1), umfassend:
einen Hauptkörper (5);
einen Produktträger (9) mit einer Transportfläche (11) zur Aufnahme eines zu transportierenden Produkts (3); und
ein an dem Hauptkörper (5) angebrachtes Stützelement (15) mit einer Stützfläche (17);
wobei der Produktträger (9) entlang einer relativ zu dem Hauptkörper (5) definierten Arbeitsrichtung (13) beweglich an dem Hauptkörper (5) angebracht ist;
wobei der Produktträger (9) dazu konfiguriert ist, sich in einer Abgabebewegung zur Abgabe eines auf der Transportfläche (11) aufgenommenen Produkts (3) unter dem auf der Transportfläche (11) aufgenommenen Produkt (3) entlang der Arbeitsrichtung (13) wegzubewegen; und
wobei die Stützfläche (17) dazu konfiguriert ist, während der Abgabebewegung einen Teil (43) des Produkts (3), unter welchem sich der Produktträger (9) wegbewegt hat, zumindest zeitweise zu stützen.

2. Greiferanordnung nach Anspruch 1, wobei die Stützfläche (17) während der Abgabebewegung auf demselben Höhenniveau wie die Transportfläche (11) oder tiefer als die Transportfläche (11) liegt.

3. Greiferanordnung nach Anspruch 1 oder 2, wobei die Transportfläche (11) dazu konfiguriert ist, zu Beginn der Abgabebewegung bezüglich einer vertikalen Projektionsrichtung oder bezüglich einer zu der Transportfläche (11) senkrechten Projektionsrichtung mit der Stützfläche (17) zu überlappen.

4. Greiferanordnung nach einem der vorangehenden Ansprüche, wobei der von der Stützfläche (17) während der Abgabebewegung zumindest zeitweise gestützte Teil (43) des Produkts (3) einen Teil (43) des Produkts (3) umfasst, unter welchem sich der Produktträger (9) bei der Abgabebewegung als erstes wegbewegt hat.

5. Greiferanordnung nach einem der vorangehenden Ansprüche, wobei die Bewegung des Produktträgers (9) bei der Abgabebewegung entlang der Arbeitsrichtung (13) von dem Stützelement (15) weg gerichtet ist.

6. Greiferanordnung nach einem der vorangehenden Ansprüche, wobei das Stützelement (15) dazu konfiguriert ist, dem Produktträger (9) zumindest während eines ersten Teils der Abgabebewegung entlang der Arbeitsrichtung (13) zu folgen.

7. Greiferanordnung nach Anspruch 6, wobei ein Abstand entlang der Arbeitsrichtung (13) zwischen der Stützfläche (17) und der Transportfläche (11) während des ersten Teils der Abgabebewegung konstant bleibt und sich dann im weiteren Verlauf der Abgabebewegung vergrößert.

8. Greiferanordnung nach Anspruch 6 oder 7, wobei das Stützelement (15) dazu konfiguriert ist, während eines dem ersten Teil der Abgabebewegung nachfolgenden zweiten Teils der Abgabebewegung seine Position entlang der Arbeitsrichtung (13) beizubehalten.

9. Greiferanordnung nach einem der Ansprüche 1 bis 5, wobei das Stützelement (15) dazu konfiguriert ist, zumindest während der Abgabebewegung bezüglich des Hauptkörpers (5) ortsfest zu sein.

10. Greiferanordnung nach einem der vorangehenden Ansprüche, wobei die Greiferanordnung (1) dazu konfiguriert ist, in einem ersten Betriebsmodus betrieben zu werden, in welchem die Stützfläche (17) dazu konfiguriert ist, während der Abgabebewegung den Teil (43) des Produkts (3), unter welchem sich der Produktträger (9) wegbewegt hat, zumindest zeitweise zu stützen; und
wobei die Greiferanordnung (1) dazu konfiguriert ist, in einem zweiten Betriebsmodus betrieben zu werden, in welchem die Stützfläche (17) dazu konfiguriert ist, während der Abgabebewegung nicht mit dem Produkt (3) in Kontakt zu kommen.

11. Greiferanordnung nach einem der vorangehenden Ansprüche, zudem umfassend einen Anschlag (23), wobei der Produktträger (9) dazu konfiguriert ist, entlang der Arbeitsrichtung (13) auf den Anschlag (23) zuzufahren, um ein zwischen dem Anschlag (23) und dem Produktträger (9) liegendes Produkt (3) auf der Transportfläche (11) aufzunehmen, und wobei der Anschlag (23) dazu konfiguriert ist, hierbei einem Wegschieben des Produkts (3) durch den Produktträger (9) entgegenzuwirken.

12. Greiferanordnung nach Anspruch 11, wobei der Anschlag (23) höhenverstellbar an dem Hauptkörper (5) angebracht ist.

13. Verfahren zum Transportieren von Produkten (3) mit einer Greiferanordnung (1), welche einen Hauptkörper (5), einen an dem Hauptkörper (5) angebrachten Produktträger (9) und ein an dem Hauptkörper (5) angebrachtes Stützelement (15) umfasst, wobei das Verfahren folgende Schritte aufweist:
Verbringen der Greiferanordnung (1) an einen Aufnahmeort (27);
an dem Aufnahmeort (27) Bewegen des Produktträgers (9) entlang einer relativ zu dem Hauptkörper (5) definierten Arbeitsrichtung (13), so dass der Produktträger (9) unter ein Produkt (3) geschoben wird und das Produkt (3) so auf einer Transportfläche (11) des Produktträgers (9) aufgenommen wird;
Verbringen der Greiferanordnung (1) mit dem aufgenommenen Produkt (3) an einen Abgabeort (41);
an dem Abgabeort (41) Bewegen des Produktträgers (9) entlang der Arbeitsrichtung (13), so dass sich der Produktträger (9) in einer Abgabebewegung unter dem auf der Transportfläche (11) aufgenommenen Produkt (3) wegbewegt; und
Stützen eines Teils des Produkts (3), unter welchem sich der Produktträger (9) wegbewegt hat, durch eine Stützfläche (17) des Stützelements (15) während zumindest eines Teils der Abgabebewegung.

14. Verfahren nach Anspruch 13, wobei sich der Produktträger (9) und das Stützelement (15) während des weiteren Verlaufs der Abgabebewegung auseinanderbewegen zumindest bis das Produkt (3) zwischen dem Produktträger (9) und dem Stützelement (15) nach unten durchfällt.

15. Verfahren nach Anspruch 13 oder 14, wobei das Stützelement (15) zumindest während eines ersten Teils der Abgabebewegung dem Produktträger (9) entlang der Arbeitsrichtung (13) nachgeführt wird und dabei zumindest teilweise unter das Produkt (3) gelangt.
